# EUROPÄISCHE PATENTSCHRIFT

(11) **EP 4 631 404 B1**
(45) Veröffentlichungstag und Bekanntmachung des Hinweises auf die Patenterteilung: **05.08.2026**
(21) Anmeldenummer: 25158503.0
(22) Anmeldetag: 18.02.2025
(51) Int. Cl.: A47J 31/44

(54) **VERFAHREN ZUR HERSTELLUNG EINES KAFFEE-GAS-MISCHGETRÄNKS, KAFFEE-GAS-MISCHVORRICHTUNG UND KAFFEEGETRÄNKEZUBEREITUNGSVORRICHTUNG**
METHOD FOR PRODUCING A COFFEE-GAS MIXED BEVERAGE, COFFEE-GAS MIXED APPARATUS AND COFFEE BEVERAGE PREPARATION APPARATUS
PROCÉDÉ DE PRODUCTION D'UNE BOISSON MÉLANGÉE À DU CAFÉ ET GAZ, DISPOSITIF DE MÉLANGE DE CAFÉ ET DE GAZ ET DISPOSITIF DE PRÉPARATION DE CAFÉ

(30) Priorität: 10.04.2024 DE 102024001153; 24.04.2024 DE 102024111502
(43) Veröffentlichungstag der Anmeldung: 15.10.2025
(73) Patentinhaber: Eugster/Frismag AG, 8580 Amriswil (CH)
(72) Erfinder: Frei, Nicolas, 9320 Arbon (CH); Sievi, Mario, 8595 Altnau (CH); Wäger, Simon, 8580 Amriswil (CH)
(74) Vertreter: Patent- und Rechtsanwälte Behrmann Wagner PartG mbB

(56) Entgegenhaltungen:
- EP-A1- 3 437 526
- EP-A1- 3 763 223
- WO-A1-2019/166785
- US-A1- 2010 034 942
- US-A1- 2018 352 994

## Beschreibung

Nitro Coffee ist ein ca. im Jahr 2010 vorgestelltes Kaffeegetränk, zu dessen Herstellung kaltextrahierter Kaffee in einem weiteren Schritt mit Stickstoff (engl. nitrogen) angereichert wird.

Der Anreicherungsprozess geschieht üblicherweise unter Druck, beispielsweise an einer Zapfanlage mit integrierten Mischelementen. Daran angeschlossen sind einerseits ein Kaffeetank und andererseits ein Stickstoff-Druckbehälter, beispielsweise in Form einer Gasflasche. Das Getränk weist kurz nach Bezug eine hellbraune, samtige Trübung auf. Da die winzigen Stickstoffblasen allmählich aufsteigen, beginnt auch die Trübung vom Behälterboden an aufwärts zu verschwinden. Nach wenigen Minuten verbleiben eine weißliche, stabile Crema und darunter der Cold-Brew-Kaffee in seiner ursprünglichen schwarzen Farbe. Die feinen Blasen verursachen eine cremige Textur, welche das Trinkgefühl verändert und die Zugabe von Milch erübrigen kann.

Nachteile herkömmlicher Kaffee-Gas-Mischsysteme sind hohe Herstellkosten, da das System unter Hochdruck steht und die Komponenten robust und präzise sein müssen. Zudem benötigen die Systeme Mehrweg-Gasflaschen oder Einweg-Kapseln für die Bereitstellung des Stickstoffs, deren Verwendung ebenfalls kostenintensiv ist und ein Unfallrisiko verursacht. Des Weiteren sind die Verfahren aufwändig, da der Prozess der Extraktion des Kaffees aus dem Kaffeebohnenmehl oder einem anderen Substrat und das Verfahren der Stickstoffanreicherung in zwei Schritten stattfinden. Dazu muss das Kaffeegetränk zunächst hergestellt und anschließend bevorratet werden, was neben dem hohen Aufwand auch die Qualität des Kaffeegetränks beeinflussen kann und verschiedene Möglichkeiten der hygienischen Beeinträchtigung des Kaffeegetränks eröffnet.

Beispielsweise offenbart die EP 3 763 223 A1 ein Verfahren und eine Vorrichtung zur Ausgabe eines mit einem Gas angereicherten Kaffee- oder Teegetränks. Dabei wird ein vorbereitetes, ausgabebereites Getränk aus einem Vorratsbehälter mittels einer Pumpe entnommen, wobei der Pumpe saugseitig ein Gas zugeführt wird. In Förderrichtung hinter der Pumpe ist ein Strömungswiderstand angeordnet, wodurch an der Pumpe ausgangsseitig eine Druckerhöhung erfolgt, welche zu einer Durchmischung des Getränk-Gas-Gemischs führt.

Weiterhin offenbart die US 2018 / 352 994 A1 ein Verfahren und eine Maschine zum Herstellen eines Kaffee- oder Teegetränks, wobei ein Gas, insbesondere Umgebungsluft, einer Brühkammer zugeführt wird und dort beim Brühvorgang unter Druck gesetzt wird. Dazu wird das Gas aus einer Zuleitung von einer nachströmenden Flüssigkeit in die Brühkammer geschoben und dort verdichtet.

Die EP 3 437 526 A1 offenbart ein Zubereitungsgerät, insbesondere für Haushaltsanwendung, für ein Getränk durch Elution oder Auslaugen eines Stoffs. Die Druckschrift bezieht sich dabei insbesondere auf Kaffee nach einem sogenannten "Cold-brew-Verfahren". Es wird eine Vorrichtung offenbart, die eine Einrichtung zum Erzeugen von sogenanntem "Mikroblasen-Wasser" als Versorgungseinheit aufweist.

Weiterhin offenbart die US 2010 / 034 942 A1 ein Verfahren, um ein Heißgetränk herzustellen, insbesondere Kaffee oder Tee. Dabei wird in einem Zubereitungsschritt vor einem Einleiten von Wasser oder Dampf in eine Brühkammer ein Druckgas in die Brühkammer eingeleitet. Dabei steigt der Innendruck in der Brühkammer.

Außerdem offenbart die WO 2019 / 166 785 A1 eine Getränkezubereitungsvorrichtung mit einer Brüheinheit, welche zum Durchführen verschiedener, beispielsweise heißer und kalter Brühverfahren eingerichtet ist. Die Vorrichtung umfasst einen Druckgastank um Flüssigkeit mit einem Gas zu versetzen.

Die Aufgabe der vorliegenden Erfindung besteht darin die Nachteile im Stand der Technik zu überwinden und eine Kaffee-Gas-Mischvorrichtung und eine diesbezügliches Verfahren vorzuschlagen, welches insbesondere die sichere, zuverlässige und günstige Herstellung eines Kaffee-Gas-Mischgetränks ermöglicht.

Diese Aufgabe wird mit dem Verfahren zur Herstellung eines Kaffee-Gas-Mischgetränks mit den Merkmalen des Anspruchs 1 gelöst. Die Aufgabe wird auch durch eine Kaffee-Gas-Mischvorrichtung mit den Merkmalen des Anspruchs 10 gelöst. Außerdem wird die vorliegende Aufgabe mit einer Kaffeegetränkezubereitungsvorrichtung mit den Merkmalen des Anspruchs 15 gelöst.

Vorteilhafte Weiterbildungen der Erfindung sind Gegenstand der nachfolgenden Beschreibung, der Figurenbeschreibung, der Figuren und der Unteransprüche.

Dabei sollen, auch zur Vermeidung von unnötigen Wiederholungen, alle verfahrensmäßig offenbarten Merkmale auch als entsprechend vorrichtungsmäßig offenbart und beanspruchbar gelten, und umgekehrt.

Das Verfahren sieht erfindungsgemäß vor, dass eine zur Extraktion eines Kaffeesubstrats verwendete Flüssigkeit, bevorzugt Wasser, zwischen einem Fluidtank zur Bevorratung der Flüssigkeit oder einem Flüssigkeitsanschluss, insbesondere Frischwasseranschluss, und einem Auslauf, bevorzugt einem Cremaventil , einer das Kaffeesubstrat bevorratenden Extraktionskammer, ein stickstoffhaltiges Gas oder Gasgemisch, bevorzugt über eine Einleitstelle in einer Fluidleitung, zugeführt wird, sodass das ein so gebildetes Flüssigkeits-Gas-Gemisch das Kaffeesubstrat durchströmt und dabei eine Extraktion aus dem Kaffeesubstrat durchgeführt wird und eine Mischung und/oder Homogenisierung des Flüssigkeits-Gas-Gemischs durchgeführt wird, bei der das Kaffeesubstrat als ein statisches Mischelement wirkt.

Dieses Verfahren hat den Vorteil, dass in einem gemeinsamen und durchgängigen Verfahren das Kaffeegetränk hergestellt und mit Stickstoff versetzt wird. Gleichzeitig liegt ein besonderer Vorteil in der Zuführung vor dem Auslauf der Extraktionskammer, da dann wie bereits angegeben, das Kaffeesubstrat, bevorzugt in der Form von Kaffeebohnenmehl, als Mischer wirkt und die Verteilung des Stickstoffs in dem Getränk deutlich verbessert. Es hat sich im Rahmen der Erfindung überraschend gezeigt, dass dabei der übliche Brühdruck ausreicht, um ein fein vermischtes Kaffee-Gas-Mischgetränk mit einer Vielzahl von sehr kleinen Gasbläschen, also einen feinen Schaum, zu erzeugen, wie es bislang nur durch Vermischung unter Hochdruck möglich ist. Weiterhin hat sich überraschend gezeigt, dass das Verfahren mit einer großen Bandbreite von stickstoffhaltigen Gasen und Gasgemischen betrieben werden kann, sodass unterschiedliche Gasquellen zum Einsatz kommen können. Wie weiter unten noch beschrieben, kann dabei auch Umgebungsluft genutzt werden, die kostengünstig und unbegrenzt zur Verfügung gestellt werden kann.

Das Fluid kann erwärmt, untemperiert oder gekühlt bereitgestellt werden. Das stickstoffhaltige Gas oder Gasgemisch kann entweder aktiv zugeführt werden, beispielweise über eine Gaspumpe oder Luftpumpe, alternativ kann das stickstoffhaltige Gas oder Gasgemisch angesaugt werden, indem beispielsweise der Fluidstrom als Venturipumpe oder Strahlpumpe genutzt wird.

In einer ersten vorteilhaften Ausführungsform kann ein Cremaventil, das der Extraktionskammer nachgeschaltet ist und/oder die Ausleitung aus der Extraktionskammer für das Flüssigkeits-Gas-Gemisch ausbildet, als ein weiteres Mischelement wirken. Damit kann in vorteilhafter Weise ein üblicherweise vorhandenes Bauelement eine zusätzliche Funktion erfüllen und den Durchmischungsgrad des Flüssigkeits-Gas-Gemischs weiter steigern und so die gewünschten Eigenschaften des Kaffee-Gas-Mischgetränks weiter verbessern. Besonders vorteilhaft wirkt eine Kombination des Kaffeesubstrats als statisches Mischelement zusammen mit dem Cremaventil als weiteres Mischelement.

Erfindungsgemäß ist vorgesehen, dass die Zuführung des stickstoffhaltigen Gases oder Gasgemischs in einem Unterdruckbereich zwischen einem Fluidtank oder Flüssigkeitsanschluss und einem Zulauf der Extraktionskammer, zwischen Fluidtank oder Flüssigkeitsanschluss und einer Fluidpumpe zur Förderung des Fluids, erfolgt. In diesem Fall sind vorteilhaft keine Pumpe oder sonstige aktive Zuführmittel nötig, um das Gas oder Gasgemisch zuzuführen. Stattdessen wird das Gas oder Gasgemisch mittels des Unterdrucks angesaugt und mitgefördert. Weiter vorteilhaft ist diese Ausführungsform, da eine Dosierung der Zuführung des Gases oder Gasgemischs unter dem geringen Fluiddruck in diesem Bereich der Fluidleitung besonders einfach durchführbar ist.

In einer vorteilhaften Ausführungsform kann vorgesehen sein, dass das stickstoffhaltige Gas oder Gasgemisch nach einem Durchflussmesser zur Messung des Volumenstroms zugeführt wird, sodass der Durchflussmesser lediglich die geförderte Flüssigkeit misst. Die Extraktionsparameter für den Bezug eines definierten Kaffeegetränks umfassen oftmals das Volumen der geförderten Flüssigkeit. Mit einem Durchflussmesser vor der Zuführung für das stickstoffhaltige Gas oder Gasgemisch kann vorteilhafterweise erreicht werden, dass die Durchflussmessung zuverlässig und prozesssicher abläuft und nicht durch das zugeführte Gas oder Gasgemisch verfälscht wird. Damit werden Messfehler und folglich unerwünschte Änderungen und/oder Beeinflussungen der nachfolgenden Extraktion auf besonders einfache Weise vermieden.

Weiterhin kann vorteilhaft vorgesehen sein, dass das Zuführen des stickstoffhaltigen Gases oder Gasgemischs von einer Steuereinheit gesteuert wird, in der wenigstens ein Zudosierprofil gespeichert ist mit dem wenigstens der Zeitpunkt und/oder die Dauer der Zuführung definiert ist. Somit können vorgegebene und reproduzierbare Eigenschaften des Kaffeegetränks erreicht werden.

Es kann weiter vorteilhaft vorgesehen sein, dass das Zudosierprofil von einem Nutzer vor und/oder während der Durchführung des Verfahrens über eine Bedienerschnittstelle, insbesondere mittelbar über die Einstellung von sensorischen Getränkeparametern, vorgegeben und/oder verändert wird. Der Nutzer kann beispielsweise Eigenschaften wie "Schaummenge" oder "Sämigkeit", beispielsweise auf einer Skala, einstellen, die dann anhand vorgegebener und gespeicherter Umrechnungsalgorithmen in Steuerparameter für die Zuführung des stickstoffhaltigen Gases oder Gasgemisches umgerechnet werden. Diese Steuerung kann auch sonstige Parameter der Getränkezubereitung beeinflussen, wie beispielsweise Pumpenprofil, Heizprofil oder dergleichen. Dadurch wird es in vorteilhafter Weise möglich, dass der Benutzer allgemein oder pro einzelnem Getränkebezug die Eigenschaften des "Kaffeeschaums" vorgibt und beeinflusst. Die Bedienerschnittstelle kann vorteilhaft als Eingabeschnittstelle ausgebildet sein, mit der auch andere Getränkeparameter und/oder Kaffeegetränkeherstellungsparameter einstellbar sind.

Es kann zudem vorteilhaft vorgesehen sein, dass die Zuführung des stickstoffhaltigen Gases oder Gasgemischs mit einer Gaspumpe, bevorzugt einer Luftpumpe erfolgt. Dadurch kann die Zuführung des stickstoffhaltigen Gases oder Gasgemischs unabhängig von der Position der Einleitstelle erfolgen, auch abseits eines Unterdruckbereichs. Damit kann der Aufbau einer Kaffeegetränkezubereitungsvorrichtung, insbesondere die Anordnung der Teilbaugruppen und Komponenten, vorteilhafterweise frei erfolgen. Weiterhin kann mittels einer Gaspumpe die zugeführte Menge des Gases oder Gasgemischs frei in einem weiten Bereich gewählt werden, da die angesaugte Menge nicht von einem nicht oder nur sehr begrenzt veränderlichen Druckgefälle zwischen der Fluidleitung und der Gaszuführung abhängig ist. Die Zuführung des stickstoffhaltigen Gases oder Gasgemischs kann damit als ein weiterer Herstellungsparameter zur Herstellung eines Kaffee-Gas-Mischgetränks genutzt werden und nicht nur in Abhängigkeit von anderen Parametern geschehen. Besonders vorteilhaft kann diese Ausführungsform in Kaffeegetränkezubereitungsvorrichtungen wirken, in welchen für eine andere Funktionalität, beispielsweise für einen Milchschäumer, eine Gaspumpe schon vorgesehen ist. Dabei kann Gas mittels geringer technischer Veränderungen des Gasleitsystems von der Pumpe auch zu der Einleitstelle gepumpt und dem Fluid zugeführt werden. Damit kann ohne eine wesentliche Steigerung der Komplexität und der Kosten der Kaffeegetränkezubereitungsvorrichtung einem Nutzer eine weitere Funktionalität angeboten werden.

Zudem kann in einer vorteilhaften Ausführungsform vorgesehen sein, dass ein Gasgemisch mit einem Stickstoffgehalt mehr als 75 Vol.-% Stickstoff zugeführt wird. Dadurch wird erreicht, dass ausreichend viel Stickstoff in das Fluid eingebracht wird, um eine merkliche Veränderung des Getränks zu bewirken. Vorteilhafterweise kann so auf den Einsatz von einem Gasgemisch mit höherem Anteil von Stickstoff oder reinem Stickstoff verzichtet werden. Damit können Kosten für die Bereitstellung des Gases oder Gasgemischs gesenkt werden. Es kann vorteilhafterweise gewöhnliche Luft genutzt werden, die einen Stickstoffgehalt von etwa 78 Vol.-% aufweist. Der Einsatz von gewöhnlicher Luft ist deutlich günstiger, als der Einsatz eines Gases oder Gasgemischs mit technisch aufwändig erhöhtem Stickstoffgehalt.

Besonders vorteilhaft kann vorgesehen sein, dass Umgebungsluft als stickstoffhaltiges Gasgemisch, bevorzugt nach einer vorherigen Filterung durch Passieren eines Luftfilters, zugeführt wird. Diese ist besonders einfach und unbegrenzt verfügbar und weist einen ausreichend hohen Stickstoffgehalt von etwa 78 Vol.-% auf. Weiterhin kann diese bevorzugt bei Umgebungsdruck verwendet werden, wodurch das verwendete System einfacher und weniger komplex ausgebildet sein kann, als bei der Verwendung eines speziell hergestellten und/oder bereitgestellten Gases oder Gasgemischs, das meist in Form von Druckbehältern zu bevorraten ist. Die Verwendung von Umgebungsluft vereinfacht daher nicht nur die Durchführung des Verfahrens und die dazu notwendige Technik, was die initialen Anschaffungskosten verringert, sondern auch der andauernde Betrieb wird vereinfacht. Beispielsweise müssen keine Druckbehälter nachgefüllt und/oder ausgetauscht werden. Damit senkt die Verwendung von Umgebungsluft die initialen Kosten und die Betriebskosten zur Durchführung des Verfahrens.

Die oben genannte Aufgabe wird auch durch eine Kaffee-Gas-Mischvorrichtung zur Herstellung eines Kaffee-Gas-Mischgetränks gelöst, welche eine Extraktionskammer zur Extraktion eines Kaffeegetränks aus einem Kaffeesubstrat mittels einer Flüssigkeit, bevorzugt Wasser, umfasst. Weiterhin umfassend eine Fluidleitung zur fluidleitenden Verbindung von einem Fluidtank zur Bevorratung der Flüssigkeit oder einem Flüssigkeitsanschluss, insbesondere Frischwasseranschluss, und einem Auslauf, bevorzugt einem Cremaventil, der Extraktionskammer, welche das Kaffeesubstrat bevorratet, umfasst. Vorliegend ist die Extraktionskammer ein Teil der Fluidleitung.

Erfindungsgemäß ist dabei vorgesehen, dass in der Fluidleitung eine Einleitstelle ausgebildet ist, über die ein stickstoffhaltiges Gas oder Gasgemisch in die Fluidleitung einleitbar ist, sodass nachgeordnet zu der Einleitstelle ein Flüssigkeits-Gas-Gemisch in der Fluidleitung förderbar ist, welches in und/oder durch die Extraktionskammer und das dort bevorratete Kaffeesubstrat förderbar ist.

Bezüglich der Vorteile wird auf das vorangehend beschriebene erfindungsgemäße Verfahren verwiesen.

**In** einer vorteilhaften Ausgestaltung kann die Einleitstelle eine Gasdosiereinheit, bevorzugt umfassend ein Gasdosierventil mit integrierter Drossel, aufweisen. Mittels der Gasdosiereinheit kann eine definierte Menge des Gases oder Gasgemischs über die Einleitstelle der Fluidleitung zuführbar sein. Damit sind die Eigenschaften und die Qualität des nachfolgend herstellbaren Kaffeegetränks gezielt steuerbar und/oder beeinflussbar.

Gemäß einer vorteilhaften Weiterbildung kann vorgesehen sein, dass die Einleitstelle nach einem Durchflussmesser in der Fluidleitung ausgebildet ist.

Erfindungsgemäß ist vorgesehen, dass die Einleitstelle vor einer Fluidpumpe, zwischen Fluidtank oder Flüssigkeitsanschluss und der Fluidpumpe, in der Fluidleitung ausgebildet ist.

**In** einer weiteren vorteilhaften Ausführungsform kann vorgesehen sein, dass eine Steuereinheit von der Kaffee-Gas-Mischvorrichtung umfasst ist, in der wenigstens ein Zudosierprofil gespeichert ist und welche so steuernd mit der Einleitstelle wirkverbunden ist, dass über die Steuereinheit wenigstens der Zeitpunkt und/oder die Dauer der Zuführung des stickstoffhaltigen Gases oder Gasgemisches vorgebbar ist. Besonders vorteilhaft wirkt diese Ausführungsform mit der vorstehend beschriebenen Gasdosiereinheit zusammen. Mittels dieser Gasdosiereinheit kann die Zuführung des stickstoffhaltigen Gases oder Gasgemisches durch die Steuereinheit besonders präzise und gezielt vorgebbar und/oder beeinflussbar sein.

Das oben genannte Problem wird auch mit einer Kaffeegetränkezubereitungsvorrichtung zum Aufbrühen und/oder Auslaugen von Kaffeesubstrat mittels einer Flüssigkeit zur Herstellung eines Kaffeegetränks gelöst, mit einem Fluidtank zur Bevorratung der Flüssigkeit oder einem Flüssigkeitsanschluss, insbesondere Frischwasseranschluss, und einem Getränkeauslass.

Erfindungsgemäß ist dabei vorgesehen, dass zwischen dem Fluidtank oder dem Flüssigkeitsanschluss und dem Getränkeauslass eine Kaffee-Gas-Mischvorrichtung nach einer der oben beschriebenen Ausführungsformen angeordnet ist. Die Kaffeegetränkezubereitungsvorrichtung ist damit um die Möglichkeit der Herstellung eines weiteren Kaffeegetränks erweitert, welches bislang nur mit aufwändiger und teurer Technik herstellbar ist.

Vorteilhaft kann vorgesehen sein, dass ein gemeinsames Gehäuse zur Einhausung auch der Kaffee-Gas-Mischvorrichtung vorgesehen ist.

Bei der Kaffeegetränkezubereitungsvorrichtung kann es sich um eine von beliebigen Arten von Vorrichtungen handeln. Es kann beispielsweise ein sogenannter Vollautomat realisiert sein, bei dem Mittel zur Bevorratung von Kaffeebohnen, eine Mahleinheit, zur Herstellung von Kaffeesubstrat, bevorzugt Kaffeebohnenmehl, aus Kaffeebohnen und eine automatisierte Brüheinheit zur automatischen Befüllung, Verdichtung, und den Auswurf von Kaffeesubstrat vorgesehen ist. Die Vorrichtung kann aber auch als Pad-, Kapsel- oder Portions-Vorrichtung ausgebildet sein, bei der das Kaffeesubstrat in einer - wie auch immer gearteten - vorportionierten Art bereitgestellt und verarbeitet wird. Gleichfalls kann die Vorrichtung als Siebträgervorrichtung ausgebildet sein, bei der ein entnehmbarer Siebträger das Kaffeesubstrat bevorratet und die Extraktionskammer mitausbildet. Auch Misch- oder Hybridformen der vorgenannten Typen von Vorrichtungen sind möglich.

Nachfolgend wird die vorliegende Erfindung anhand von lediglich schematischen Zeichnungen erläutert.

Darin zeigt:
- Fig. 1:: ein schematisches Fluiddiagramm einer erfindungsgemäßen Vorrichtung,
- Fig. 2:: ein schematisches Ablaufdiagramm eines erfindungsgemäßen Verfahrens.

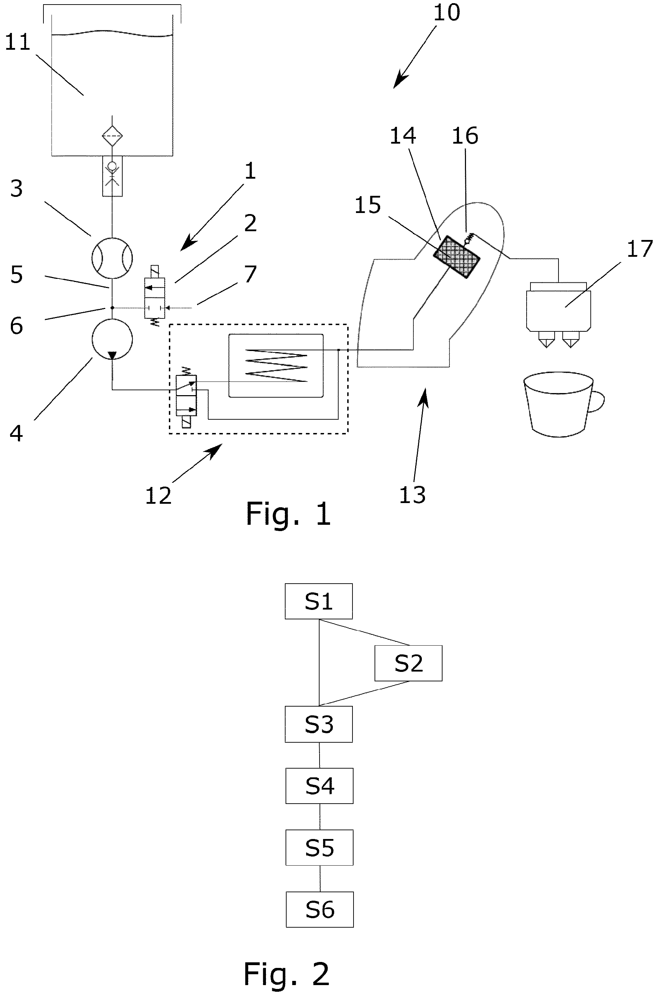

In Figur 1 ist eine Kaffee-Gas-Mischvorrichtung 1 dargestellt, die fluidleitend mit einem Fluidtank 11 einer nicht im Detail dargestellten Kaffeegetränkezubereitungsvorrichtung 10 verbunden ist. Über die Fluidpumpe 4 wird Fluid, bevorzugt Wasser aus dem Fluidtank 11 entnommen, um es einer Extraktionskammer 14 der Brüheinheit 13 zu Verfügung zu stellen und um dort aus dem in der Extraktionskammer 14 befindlichem Kaffeesubstrat 15, bevorzugt Kaffeebohnenmehl, ein Getränk aufzubrühen oder auszulaugen. Das Fluid wird dazu durch eine Fluidleitung 5 geleitet, in der oder entlang derer neben der Fluidpumpe 4, ein Durchflussmesser 3 und eine Bypass-Heizeinrichtung 12 angeordnet ist. Das Fluid gelangt über die Fluidleitung 5 in die Brüheinheit 13 und die dortige Extraktionskammer 14. Am Ausgang der Extraktionskammer 14 ist ein Ventil oder Cremaventil 16 angeordnet, was beim Überschreiten eines Innendrucks in der Extraktionskammer 14 öffnet und das aufgebrühte und/oder ausgelaugte Getränke zu einem Getränkeauslass 17 der Kaffeegetränkezubereitungsvorrichtung 10 leitet und dort ausgibt.

Erfindungsgemäß ist eine Einleitstelle 6 in die Fluidleitung 5 integriert, über die ein stickstoffhaltiges Gas oder Gasgemisch in die Fluidleitung 5 zugeführt werden kann, bevor das Fluid die Extraktionskammer 14 erreicht. Dazu ist die Einleitstelle 6 gasleitend mit einer Gasdosiereinheit, umfassend ein Gasdosierventil 2 mit integrierter Drossel, verbunden. Über die Gaszuleitung 7 wird das Gas oder Gasgemisch von einer nicht dargestellten Gasversorgung zum Gasdosierventil 2 geleitet und bei geöffnetem Gasdosierventil 2 an der Einleitstelle 6 der Fluidleitung 5 zugeführt. Bei der Gasversorgung kann es sich beispielsweise um einen Luftfilter und eine Ansaugöffnung für Umgebungsluft handeln. Bevorzugt, wird die Umgebungsluft über den Unterdruck in der Fluidleitung 5, den die Fluidpumpe 4 in der Fluidleitung 5 erzeugt, angesaugt. In einer alternativen Ausführungsform kann eine Gaspumpe Umgebungsluft ansaugen und unter einem Überdruck in die Gaszuleitung 7 einspeisen. Alternativ kann auch ein Vorratsbehälter, wie beispielsweise eine Druckgaskartusche, mit der Gaszuleitung 7 verbunden sein.

Beim Durchströmen des Kaffeesubstrats 15 wird nicht nur eine Extraktion bewirkt, sondern das Kaffeesubstrat 15 wirkt auch als statischer Einweg-Mischer und vermischt und/oder homogenisiert den Stickstoff in feine Bläschen in dem Flüssigkeits-Gas-Gemisch, welches sich beim Passieren des Kaffeesubstrat 15 somit graduell in das jeweilige Getränk verändert. Durch das Cremaventil 16 wird das Getränk aus der Extraktionskammer 14 ausgeleitet, wobei das Flüssigkeits-Gas-Gemisch beim Passieren des Cremaventils 16 weiter durchmischt wird. **In** dem über das Cremaventil 16 abgegebenen Getränk sind somit nicht nur die Extraktionsresultate aus der Extraktion des Kaffeesubstrats 15 enthalten, sondern auch eine Vielzahl von feinen Stickstoffbläschen.

**In** der Figur 2 ist ein schematisches Ablaufdiagramm eines erfindungsgemäßen Verfahrens dargestellt. Dabei ist zu beachten, dass es sich bei dem erfindungsgemäßen Verfahren nicht um ein getaktetes Verfahren handelt, bei welchem die Verfahrensschritte chronologisch nacheinander ablaufen, sondern um ein kontinuierliches Verfahren, wobei die Verfahrensschritte auch parallel ablaufen können.

In einem ersten Verfahrensschritt S1 wird Fluid aus einem Fluidtank entnommen und für das Verfahren zur Verfügung gestellt. In einem zweiten Verfahrensschritt S2 kann ein stickstoffhaltiges Gas oder Gasgemisch in erfindungsgemäßer Weise mittels einer Einleitstelle dem Fluid zugeführt werden. In vorteilhafter Weise ist die Gaszuführung steuerbar, so dass beispielsweise die zugeführte Menge steuerbar ist, wobei die Menge auch 0 sein kann, wodurch der zweite Verfahrensschritt übersprungen wird. Damit kann in vorteilhafter Weise auch ein herkömmliches Kaffeegetränk ohne zugeführtes stickstoffhaltiges Gas oder Gasgemisch hergestellt werden.

Im dritten Verfahrensschritt S3 wird das Flüssigkeits-Gas-Gemisch oder das Fluid mittels einer Pumpe einer Extraktionskammer zugeführt. In dieser findet im vierten Verfahrensschritt S4 die Extraktion des Kaffeesubstrats statt. Wenn im zweiten Verfahrensschritt S2 dem Fluid stickstoffhaltiges Gas oder Gasgemisch zugeführt wird, dann wird das Flüssigkeits-Gas-Gemisch im vierten Verfahrensschritt S4 beim Durchströmen des Kaffeesubstrats fein vermischt und/oder homogenisiert. Es wird eine Vielzahl feiner Gasbläschen in dem Flüssigkeits-Gas-Gemisch erzeugt und gleichmäßig in dem Gemisch verteilt. Im fünften Verfahrensschritt S5 wird das Kaffeegetränk bei Überschreiten eines definierten Innendrucks in der Extraktionskammer über ein Cremaventil aus der Extraktionskammer ausgeleitet. Dabei wird das Kaffeegetränk in einer zweiten Durchmischung und Homogenisierung weiter verändert. Im Fall der Herstellung eines herkömmlichen Kaffeegetränks erzeugt das Cremaventil eine Crema, also einen Anteil schaumigen Kaffeegetränks. Wenn im zweiten Verfahrensschritt S2 dem Fluid stickstoffhaltiges Gas oder Gasgemisch zugeführt wird, dann wird das Flüssigkeits-Gas-Gemisch im fünften Verfahrensschritt S5 weiter vermischt und homogenisiert, so dass ein verbesserter Kaffeegetränkeschaum hergestellt wird. Im sechsten Verfahrensschritt S6 wird das Kaffeegetränk über einen Getränkeauslauf zum Konsum ausgegeben.

### Bezugszeichenliste

- 1: Kaffee-Gas-Mischvorrichtung
- 2: Gasdosierventil
- 3: Durchflussmesser
- 4: Fluidpumpe
- 5: Fluidleitung
- 6: Einleitstelle
- 7: Gaszuleitung
- 10: Kaffeegetränkezubereitungsvorrichtung
- 11: Fluidtank
- 12: Bypass-Heizeinrichtung
- 13: Brüheinheit
- 14: Extraktionskammer
- 15: Kaffeesubstrat
- 16: Cremaventil
- 17: Getränkeauslass

- S1: erster Verfahrensschritt: Fluidbereitstellung
- S2: zweiter Verfahrensschritt: Zuführung eines Gases oder Gasgemischs
- S3: dritter Verfahrensschritt: Pumpen und Zuführen in die Extraktionskammer
- S4: vierter Verfahrensschritt: Extraktion in der Extraktionskammer und Durchmischung und/oder Homogenisierung
- S5: fünfter Verfahrensschritt: Ausleiten aus der Extraktionskammer durch ein Cremaventil
- S6: sechster Verfahrensschritt: Abgabe des Kaffeegetränks durch einen Getränkeauslauf

## Patentansprüche

1. Verfahren zur Herstellung eines Kaffee-Gas-Mischgetränks,
wobei einer zur Extraktion eines Kaffeesubstrats (15) verwendeten Flüssigkeit, bevorzugt Wasser, zwischen einem Fluidtank (11) zur Bevorratung der Flüssigkeit oder einem Flüssigkeitsanschluss, insbesondere Frischwasseranschluss, und einem Auslauf, bevorzugt einem Cremaventil (16), einer das Kaffeesubstrat (15) bevorratenden Extraktionskammer (14), ein stickstoffhaltiges Gas oder Gasgemisch, bevorzugt über eine Einleitstelle (6) in einer Fluidleitung (5), zugeführt wird, sodass ein so gebildetes Flüssigkeits-Gas-Gemisch das Kaffeesubstrat (15) durchströmt und dabei eine Extraktion aus dem Kaffeesubstrat (15) durchgeführt wird und eine Mischung und/oder Homogenisierung des Flüssigkeits-Gas-Gemischs durchgeführt wird, bei der das Kaffeesubstrat (15) als ein statisches Mischelement wirkt,
**dadurch gekennzeichnet,**
**dass** die Zuführung des stickstoffhaltigen Gases oder Gasgemischs in einem Unterdruckbereich zwischen dem Fluidtank (11) oder Flüssigkeitsanschluss und einer Fluidpumpe (4) zur Förderung der Flüssigkeit erfolgt.

2. Verfahren nach Anspruch 1,
**dadurch gekennzeichnet,**
**dass** das Cremaventil (16), das der Extraktionskammer (14) nachgeschaltet ist und/oder die Ausleitung aus der Extraktionskammer (14) für das Flüssigkeits-Gas-Gemisch ausbildet, als ein weiteres Mischelement wirkt.

3. Verfahren nach einem der vorhergehenden Ansprüche,
**dadurch gekennzeichnet,**
**dass** das stickstoffhaltige Gas oder Gasgemisch nach einem Durchflussmesser (3) zur Messung des Volumenstroms zugeführt wird, sodass der Durchflussmesser (3) lediglich die geförderte Flüssigkeit misst.

4. Verfahren nach einem der vorhergehenden Ansprüche,
**dadurch gekennzeichnet,**
**dass** das Zuführen des stickstoffhaltigen Gases oder Gasgemischs von einer Steuereinheit gesteuert wird, in der wenigstens ein Zudosierprofil gespeichert ist mit dem wenigstens der Zeitpunkt und/oder die Dauer der Zuführung definiert ist.

5. Verfahren nach Anspruch 4,
**dadurch gekennzeichnet,**
**dass** das Zudosierprofil von einem Nutzer vor oder während der Durchführung des Verfahrens über eine Bedienerschnittstelle, insbesondere mittelbar über die Einstellung von sensorischen Getränkeparametern, vorgegeben und/oder verändert wird.

6. Verfahren nach einem der vorhergehenden Ansprüche,
**dadurch gekennzeichnet,**
**dass** die Zuführung des stickstoffhaltigen Gases oder Gasgemischs mit einer Gaspumpe, bevorzugt einer Luftpumpe, erfolgt.

7. Verfahren nach einem der vorhergehenden Ansprüche,
**dadurch gekennzeichnet,**
**dass** ein Gasgemisch mit einem Stickstoffgehalt von mehr als 75 Vol.-% Stickstoff zugeführt wird.

8. Verfahren nach einem der vorhergehenden Ansprüche,
**dadurch gekennzeichnet,**
**dass** Umgebungsluft als stickstoffhaltiges Gasgemisch, bevorzugt nach einer vorherigen Filterung durch Passieren eines Luftfilters, zugeführt wird.

9. Kaffee-Gas-Mischvorrichtung (1) zur Herstellung eines Kaffee-Gas-Mischgetränks mit einer Extraktionskammer (14) zur Extraktion eines Kaffeegetränks aus einem Kaffeesubstrat (15) mittels einer Flüssigkeit, bevorzugt Wasser, weiter umfassend eine Fluidleitung (5) zur fluidleitenden Verbindung von einem Fluidtank (11) zur Bevorratung der Flüssigkeit oder einem Flüssigkeitsanschluss, insbesondere Frischwasseranschluss, mit einem Auslauf, bevorzugt einem Cremaventil (16), der das Kaffeesubstrat (15) bevorratenden Extraktionskammer (14), wobei in der Fluidleitung (5) eine Einleitstelle (6) ausgebildet ist, über die ein stickstoffhaltiges Gas oder Gasgemisch in die Fluidleitung (5) einleitbar ist, sodass nachgeordnet zu der Einleitstelle (6) ein Flüssigkeits-Gas-Gemisch in der Fluidleitung (5) förderbar ist, welches in und/oder durch das in der Extraktionskammer (14) bevorratete Kaffeesubstrat (15) förderbar ist,
**dadurch gekennzeichnet,**
**dass** die Einleitstelle (6) vor einer Fluidpumpe (4), zwischen dem Fluidtank (11) oder Flüssigkeitsanschluss und der Fluidpumpe (4), in der Fluidleitung (5) ausgebildet ist.

10. Kaffee-Gas-Mischvorrichtung (1) nach Anspruch 9,
**dadurch gekennzeichnet,**
**dass** die Einleitstelle (6) eine Gasdosiereinheit, bevorzugt umfassend ein Gasdosierventil (2) mit integrierter Drossel, aufweist.

11. Kaffee-Gas-Mischvorrichtung (1) nach Anspruch 9 oder 10,
**dadurch gekennzeichnet,**
**dass** die Einleitstelle (6) nach einem Durchflussmesser (3) in der Fluidleitung (5) ausgebildet ist.

12. Kaffee-Gas-Mischvorrichtung (1) nach einem der Ansprüche 9 bis 11,
**gekennzeichnet durch**
eine Steuereinheit in der wenigstens ein Zudosierprofil gespeichert ist und welche so steuernd mit der Einleitstelle wirkverbunden ist, dass über die Steuereinheit wenigstens der Zeitpunkt und/oder die Dauer der Zuführung des stickstoffhaltigen Gases oder Gasgemisches vorgebbar ist.

13. Kaffeegetränkezubereitungsvorrichtung (10) zum Aufbrühen und/oder Auslaugen von Kaffeesubstrat mittels einer Flüssigkeit zur Herstellung eines Kaffeegetränks mit einem Fluidtank (11) zur Bevorratung der Flüssigkeit oder einem Flüssigkeitsanschluss, insbesondere Frischwasseranschluss, und einem Getränkeauslass (17),
**dadurch gekennzeichnet,**
**dass** zwischen dem Fluidtank (11) oder dem Fluidanschluss und dem Getränkeauslass (17) eine Kaffee-Gas-Mischvorrichtung (1) nach einem der Ansprüche 9 bis 12 angeordnet ist.

14. Kaffeegetränkezubereitungsvorrichtung (10) nach Anspruch 13,
**gekennzeichnet durch**
ein gemeinsames Gehäuse zur Einhausung auch der Kaffee-Gas-Mischvorrichtung.

## Claims

1. A method for producing a coffee-gas mixed beverage, a nitrogenous gas or gas mixture being added to a liquid, preferably water, which is used for extraction from coffee grounds (15), between a liquids tank (11) for storing the liquid or a liquids connection, in particular an open-circuit water supply, and an outlet, preferably a crema valve (16), of an extraction chamber (14) storing the coffee grounds (15), preferably via an inflow point (6) in a liquids tube (5) so that a thus formed liquid-gas mixture flows through the coffee grounds (15) and an extraction from the coffee grounds (15) is carried out in the process and the liquid-gas mixture is mixed and/or homogenized, during the process of which the coffee grounds (15) act as a static mixing element,
**characterized in that**
the nitrogenous gas or gas mixture is supplied in a vacuum area between the liquids tank (11) or the liquids connection and a liquids pump (4) for conveying the liquid.

2. The method according to claims 1,
**characterized in that**
the crema valve (16), which is connected downstream of the extraction chamber (14) and/or forms the drain from the extraction chamber (14) for the liquid-gas mixture, acts as another mixing element.

3. The method according to any one of the preceding claims, **characterized in that**
the nitrogenous gas or gas mixture is supplied downstream of a flow rate meter (3) for metering the flow rate, meaning the flow rate meter (3) merely meters the conveyed liquid.

4. The method according to any one of the preceding claims, **characterized in that**
the supply of the nitrogenous gas or gas mixture is controlled by a control unit, in which at least one adding profile defining at least the point in time and/or duration of the supply is stored.

5. The method according to claim 4,
**characterized in that**
the adding profile is prespecified and/or changed by a user via a user interface, in particular directly via the setting of sensory beverage parameters, prior to or during the implementation of the method.

6. The method according to any one of the preceding claims, **characterized in that**
the nitrogenous gas or gas mixture is supplied using a gas pump, preferably an air pump.

7. The method according to any one of the preceding claims, **characterized in that**
a gas mixture having a nitrogen content of more than 75 vol% nitrogen is supplied.

8. The method according to any one of the preceding claims, **characterized in that**
ambient air is supplied as the nitrogenous gas mixture, preferably after previous filtration by passing through an air filter.

9. A coffee-gas mixing device (1) for making a coffee-gas mixed beverage using an extraction chamber (14) for extracting a coffee beverage from coffee grounds (15) by means of a liquid, preferably water, the coffee-gas mixing device (1) further comprising a liquids tube (5) for fluidically connecting a liquids tank (11) for storing the liquid or a liquids connection, in particular an open-circuit water supply, to an outlet, preferably a crema valve (16), of the extraction chamber (14) storing the coffee grounds (15), an inflow point (6), via which a nitrogenous gas or gas mixture is able to be introduced into the liquids tube (5), being formed in the liquids tube (5) so that a liquid-gas mixture is conveyable in the liquids tube (5) downstream of the inflow point (6), the liquid-gas mixture being conveyable in and/or through the coffee grounds (15) stored in the extraction chamber (14), **characterized in that**
the inflow point (6) is formed in the liquids tube (5) upstream of a liquids pump (4), between the liquids tank (11) or the liquids connection and the liquids pump (4).

10. The coffee-gas mixing device (1) according to claim 9,
**characterized in that**
the inflow point (6) has a gas metering unit, preferably comprising a gas metering valve (2) having an integrated throttle.

11. The coffee-gas mixing device (1) according to claim 9 or 10, **characterized in that**
the inflow point (6) is formed downstream of a flow rate meter (3) in the liquids tube (5).

12. The coffee-gas mixing device (1) according to any one of the claims 9 to 11,
**characterized by**
a control unit, in which at least one adding profile is stored and which is operatively connected in such a manner to the inflow point that at least the point in time and/or the duration of the supply of the nitrogenous gas or gas mixture is able to be prespecified via the control unit.

13. A coffee beverage preparation device (10) for brewing and/or leaching coffee grounds by means of a liquid for making a coffee beverage with a liquids tank (11) for storing the liquid or a liquid connection, in particular an open-circuit water supply, and a beverage outlet (17), **characterized in that**
a coffee-gas mixing device (1) according to any one of the claims 9 to 12 is disposed between the liquids tank (11) or the liquids connection and the beverage outlet (17).

14. The coffee beverage preparation device (10) according to claim 13, **characterized by**
a shared casing for also encasing the coffee-gas mixing device.

## Revendications

1. Procédé de fabrication d'une boisson mélangée à base de café et de gaz, un gaz azoté ou un mélange de gaz azoté étant ajouté à un liquide, de préférence de l'eau, utilisé pour l'extraction à partir de marc de café (15) entre une citerne à fluides (11) destinée à stocker le liquide ou une prise de fluides, notamment une alimentation en eau en circuit ouvert, et une sortie, de préférence une vanne de crème (16), d'une chambre d'extraction (14) contenant les marcs de café (15), de préférence par l'intermédiaire d'un point d'afflux (6) dans un tuyau de fluides (5) de sorte qu'un mélange ainsi formé à base de liquide et de gaz s'écoule à travers les marcs de café (15) et qu'une extraction à partir des marcs de café (15) est effectuée au cours du processus et que le mélange à base de liquide et de gaz est mélangé et/ou homogénéisé, au cours duquel les marcs de café (15) agissent comme un élément de mélange statique,
**caractérisé en ce que**
le gaz azoté ou le mélange de gaz azoté est introduit dans une zone de vide située entre la citerne à fluides (11) ou la prise de fluides et une pompe à fluides (4) destinée à acheminer le liquide.

2. Procédé selon la revendication 1,
**caractérisé en ce que**
la vanne de crème (16), qui est raccordée en aval de la chambre d'extraction (14) et/ou forme la vidange de la chambre d'extraction (14) pour le mélange à base de liquide et de gaz, agit comme un autre élément de mélange.

3. Procédé selon l'une quelconque des revendications précédentes, **caractérisé en ce que**
le gaz azoté ou le mélange de gaz azoté est acheminé en aval d'un débitmètre (3) destiné à mesurer le débit volumique, afin que le débitmètre (3) mesure uniquement le liquide transporté.

4. Procédé selon l'une quelconque des revendications précédentes, **caractérisé en ce que**
l'alimentation en gaz azoté ou en mélange de gaz azoté est commandée par une unité de contrôle, dans laquelle est enregistré au moins un profil d'ajout définissant au moins le moment et/ou la durée de l'alimentation.

5. Procédé selon la revendication 4,
**caractérisé en ce que**
le profil d'ajout est prédéfini et/ou modifié par un utilisateur par l'intermédiaire d'une interface utilisateur, notamment directement par l'intermédiaire du réglage de paramètres sensoriels de la boisson, avant ou pendant la mise en œuvre du procédé.

6. Procédé selon l'une quelconque des revendications précédentes, **caractérisé en ce que**
le gaz azoté ou le mélange de gaz azoté est fourni à l'aide d'une pompe à gaz, de préférence une pompe à air.

7. Procédé selon l'une quelconque des revendications précédentes, **caractérisé en ce**
**qu'**un mélange de gaz ayant une teneur en azote supérieure à 75 % en volume d'azote est fourni.

8. Procédé selon l'une quelconque des revendications précédentes, **caractérisé en ce que**
de l'air ambiant est fourni en tant que mélange de gaz azoté, de préférence après filtration préalable par passage à travers un filtre à air.

9. Dispositif (1) de mélange à base de café et de gaz destiné à la fabrication d'une boisson mélangée à base de café et de gaz, utilisant une chambre d'extraction (14) pour extraire une boisson à base de café à partir de marcs de café (15) au moyen d'un liquide, de préférence de l'eau, le dispositif (1) de mélange à base de café et de gaz comprenant en outre un tuyau de fluides (5) destiné à relier de manière fluidique une citerne à fluides (11) destinée à stocker le liquide ou une prise de fluides, notamment une alimentation en eau en circuit ouvert, à une sortie, de préférence une vanne de crème (16), de la chambre d'extraction (14) contenant les marcs de café (15), un point d'afflux (6), par lequel un gaz azoté ou un mélange de gaz azoté peut être introduit dans le tuyau de fluides (5), étant formé dans le tuyau de fluides (5) de sorte qu'un mélange à base de liquide et de gaz peut être acheminé dans le tuyau de fluides (5) en aval du point d'afflux (6), le mélange à base de liquide et de gaz pouvant être acheminé dans et/ou à travers les marcs de café (15) stockés dans la chambre d'extraction (14),
**caractérisé en ce que**
le point d'afflux (6) est formé dans le tuyau de fluides (5) en amont d'une pompe à fluides (4), entre le réservoir de fluides (11) ou la prise de fluides et la pompe à fluides (4).

10. Dispositif (1) de mélange à base de café et de gaz selon la revendication 9,
**caractérisé en ce que**
le point d'afflux (6) a une unité de dosage de gaz, de préférence comprenant une vanne (2) de dosage de gaz dotée d'un étranglement intégré.

11. Dispositif (1) de mélange à base de café et de gaz selon la revendication 9 ou la revendication 10,
**caractérisé en ce que**
le point d'afflux (6) est formé en aval d'un débitmètre (3) dans le tuyau de fluides (5).

12. Dispositif (1) de mélange à base de café et de gaz selon l'une quelconque des revendications 9 à 11,
**caractérisé par**
une unité de contrôle, dans laquelle au moins un profil d'ajout est enregistré et qui est reliée de manière opérationnelle au point d'afflux de telle sorte qu'au moins le moment et/ou la durée de l'alimentation en gaz azoté ou en mélange de gaz azoté peut être prédéfini par l'intermédiaire de l'unité de contrôle.

13. Dispositif (10) de préparation d'une boisson à base de café destiné à l'infusion et/ou à l'extraction de marc de café à l'aide d'un liquide afin de la préparation d'une boisson à base de café, le dispositif (10) comprenant un réservoir de fluide (11) destiné à stocker le liquide ou une connexion de fluide, notamment une alimentation en eau en circuit ouvert, et une sortie de boisson (17),
**caractérisé en ce**
**qu'**un dispositif (1) de mélange à base de café et de gaz selon l'une quelconque des revendications 9 à 12 est disposé entre le réservoir de fluide (11) ou la prise de fluide et la sortie de boisson (17).

14. Dispositif (10) de préparation d'une boisson à base de café selon la revendication 13,
**caractérisé par**
un boîtier commun destiné à loger également le dispositif de mélange à base de café et de gaz.
